# EUROPÄISCHE PATENTSCHRIFT

(11) **EP 1 582 559 B1**
(45) Veröffentlichungstag und Bekanntmachung des Hinweises auf die Patenterteilung: **11.05.2011**
(21) Anmeldenummer: 04006760.5
(22) Anmeldetag: 20.03.2004
(51) Int. Cl.: C08K 3/04, C08L 21/00, C08L 7/00

(54) **Kautschukmischung für Laufstreifen von Reifen**
Rubber composition for tire tread
Composition de caoutchouc pour bande de roulement pneumatique

(43) Veröffentlichungstag der Anmeldung: 05.10.2005
(73) Patentinhaber: Continental Reifen Deutschland GmbH, 30165 Hannover (DE)
(72) Erfinder: Kleffmann, Jens, 30165 Hannover (DE); Thielemann, Klaus, 31137 Hildesheim (DE); Neddenriep, Thomas, 29690 Schwarmstedt (DE); Topp, Andreas, 33604 Bielefeld (DE)
(74) Vertreter: Finger, Karsten

(56) Entgegenhaltungen:
- EP-A- 1 031 441
- WO-A-2004/013222
- KR-A- 2003 020 147

## Beschreibung

Die Erfindung betrifft eine mit Schwefel vulkanisierbare, zumindest einen Dienkautschuk aufweisende Kautschukmischung für den Laufstreifen eines Reifens, insbesondere eines Nutzfahrzeugreifens. Die Erfindung betrifft ferner einen Reifen, insbesondere einen Nutzfahrzeugreifen, dessen Laufstreifen zumindest zum Teil aus der mit Schwefel vulkanisierten Kautschukmischung besteht.

Die Kautschukmischungen für Laufstreifen von Fahrzeugreifen, insbesondere Fahrzeugluftreifen, besitzen aufgrund ihrer gewünschten Eigenschaften im Hinblick auf optimales Fahrverhalten wie z. B. Handling, Nassrutsch- und Bremsverhalten, Rollwiderstand und Abriebverhalten speziell auf diese Eigenschaften optimierte Zusammensetzungen. Diese für die optimalen Fahreigenschaften verwendeten Kautschukmischungen weisen im Allgemeinen eine schlechte thermische Leitfähigkeit (Wärmeleitfähigkeit und Temperaturleitfähigkeit) auf.

Beim Gebrauch des Reifens wird durch Walk- und Fliehkräfte und durch die damit verbundenen dynamischen Verformungen aufgrund des Hystereseverlustes des Vulkanisates thermische Energie entwickelt, die nur sehr schlecht abgeführt werden kann. Damit einher-geht eine Wärmeentwicklung im Reifen und dort insbesondere an den Gürtelkanten. Dies führt zu einer Beeinträchtigung der Reifenhaltbarkeit vor allem in heißen Ländern und der Runderneuerungsfähigkeit. Das Problem der Wärmeabführung ist bei Nutzfahrzeugreifen besonders zu beachten, da diese Reifen hohen Walkkräften ausgesetzt sind und die Laufstreifen sehr dick ausgebildet sind, was eine Wärmeabführung an die Umgebungsluft erschwert.

Es ist bekannt, dass sich der Wärmeaufbau und damit die Temperatur im Bereich des Gürtels und insbesondere der Gürtelkanten reduzieren lässt, indem Mischungen verwendet werden, deren Vulkanisate einen niedrigen Hystereseverlust aufweisen. Solche Mischungen sind beispielsweise Mischungen, die Kieselsäure als Füllstoffbasis in Kombination mit einem Silankupplungsagens enthalten. Kieselsäurehaltige Mischungen weisen allerdings in der Regel keine gute Wärmeleitfähigkeit auf, so dass entstandene Wärme nur schlecht abgeleitet werden kann. Darüber hinaus zeichnen sich Vulkanisate von kieselsäurehaltige Mischungen durch eine im Vergleich zu reinen Rußmischungen geringere Abriebbeständigkeit aus, was für verschiedene Einsatzmöglichkeiten, z. B. bei Nutzfahrzeugreifen, nicht gewünscht ist.

Aus der DE-OS 1755301 ist es bekannt, die Temperaturentwicklung in Fahrzeugluftreifen und insbesondere in den Laufflächen zu verringern, indem der Fahrzeugluftreifen - und insbesondere in die Reifenlauffläche - homogen in den Kautschuk eingearbeitet Graphit enthält. Ein Laufstreifen, der in seiner Gesamtheit aus einer Graphit enthaltenden Kautschukmischung hergestellt ist, ermöglicht somit durch seine verbesserte Wärmeleitfähigkeit bei früher üblichen Diagonalreifen eine Erniedrigung der Temperatur in der Schulter des Laufstreifens. Die Zugabe von Graphit zu Kautschukmischungen speziell für Laufstreifen hat aber zur Folge, dass sich die Eigenschaften der vulkanisierten Mischungen verändern. Durch die Einmischung von Graphit in Kautschukmischungen für Laufstreifen werden beispielsweise der Nassgriff, der Trockengriff und vor allem der Abrieb negativ beeinflusst. Dies ist unter anderem auf die Gleiteigenschaften der Graphitpartikel zurückzuführen.

In der EP-A-1 031 441 wird zur effektiven Absenkung der Temperatur von Gummimischungen im gürtelnahen Bereich von Fahrzeugluftreifen vorgeschlagen, dass am Profilrillengrund und/oder im Bereich der Reifenschultern eine Gummimischung angeordnet ist, deren Wärmeleitfähigkeit um mindestens 5 % höher liegt als die Wärmeleitfähigkeit der sie umgebenden Gummimischung. Zur Erhöhung der Wärmeleitfähigkeit der Mischungen werden neben Ruß Füllstoffe wie Aluminium, Magnesium, Kupfer, Zink, Nickel oder metallenthaltende Substanzen, wie z. B. Zinkoxid, Aluminiumhydroxid, Aluminiumoxid, Silicium-Aluminiumoxide, Magnesiumoxid, Chromoxid, Titanoxid oder Siliciumcarbid, als Zuschlagstoffe vorgeschlagen.

In der US 3,954,131 werden Fahrzeugluftreifen mit Notlaufeigenschaften beschrieben, die an den Seitenwänden Einlagen aus einer Kautschukmischung aufweisen, die für eine gute Wärmeleitfähigkeit Acetylenruß enthalten.

Der vorliegenden Erfindung liegt nun die Aufgabe zugrunde, Kautschukmischungen für Laufstreifen von Reifen bereitzustellen, deren Vulkanisate sich durch eine gute Wärmeleitfähigkeit bei gleichzeitig niedrigem Abrieb auszeichnen. Reifen, deren Laufstreifen aus einer derartigen Mischung gefertigt sind, sollen sich durch effektive Temperaturabsenkung im Gürtelkantenbereich beim Fahrbetrieb auszeichnen und eine hohe Laufleistung durch verminderten Abrieb aufweisen.

Gelöst wird diese Aufgabe erfindungsgemäß dadurch, dass die Kautschukmischung
- 20 - 45 phr eines hoch abriebbeständigen Rußes mit einer Jodadsorptionszahl von 110 - 170 g/kg und einer DBP-Zahl von 90 - 140 cm³/100 g und
- 5 - 30 phr Acetylenruß enthält.

Überraschenderweise wurde festgestellt, dass durch die spezielle Kombination von hoch abriebbeständigem Ruß mit Acetylenruß in den angegebenen Mengen in der Laufstreifenmischung Reifen hergestellt werden können, die sich durch eine verbesserte Gürtelkantenhaltbarkeit auszeichnen und deren Abriebverhalten gegenüber Reifen mit Mischungen ohne Acetylenruß nicht signifikant verschlechtert ist.
Die verbesserte Gürtelkantenhaltbarkeit liegt in der verbesserten Wärmeleitfähigkeit der Mischung durch die Anwesenheit von Acetylenruß begründet. Es war allerdings nicht zu erwarten, dass sich der Abrieb bei der speziellen Kombination der beiden Ruße nicht signifikant verschlechtert, denn wird in einer Mischung der gesamte Ruß durch Acetylenruß gebildet, so ergibt sich eine für die Anwendung im Reifen völlig unzureichende Abriebbeständigkeit.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. In der Kautschukmischung addieren sich die phr-Anteile der verschiedenen Kautschuke zu 100.

Hoch abriebbeständige Ruße (früher als SAF-Typen bezeichnet) sind Furnace-Ruße, die sich durch eine hohe Struktur bei geringer Teilchengröße auszeichnen. Die Jodadsorptionszahl wird gemäß ASTM-D 1510 und die DBP-Zahl (Dibutylphthalat-Zahl) gemäß ASTM-D 2414 bestimmt. Die Teilchendurchmesser liegen in der Regel zwischen 10 und 25 nm. Es können z. B. Ruße des Typs N121, N110 und N220 eingesetzt werden.

Acetylenruß wird durch thermische Zersetzung von Acetylen hergestellt. Er zeichnet sich durch eine hohe spezifische Oberfläche, einen überdurchschnittlichen Anteil an graphitähnlichen Strukturen und einen sehr niedrigen Gehalt an sauerstoffhaltigen Gruppen aus. Er findet z. B. Einsatz bei Kautschukprodukten mit hoher elektrischer Leitfähigkeit. Acetylenruße weisen in der Regel eine DBP-Zahl zwischen 150 und 260 cm³/100 g und eine Jodadsorptionszahl > 85 g/kg auf. Die Teilchendurchmesser der Primärpartikel liegen zwischen 30 und 45 nm.

Gemäß einer vorteilhaften Weiterbildung der Erfindung enthält die Kautschukmischung 25 - 35 phr des hoch abriebbeständigen Rußes. Mit diesen Mengen konnten die besten Ergebnisse hinsichtlich der Abriebbeständigkeit erzielt werden.

Es hat sich als vorteilhaft erwiesen, wenn die Kautschukmischung 15 bis 20 phr des Acetylenrußes enthält. So wird eine optimale Wärmeleitfähigkeit bei besonders guter Abriebbeständigkeit erzielt.

Die mit Schwefel vulkanisierbare Kautschukmischung kann unterschiedlichste dem Fachmann für die Anwendung in Reifen bekannte Kautschuke enthalten, von denen jedoch zumindest einer aus der Gruppe der Dienkautschuke ausgewählt sein muss. Zu den Dienkautschuken zählen alle Kautschuke mit einer ungesättigten Kohlenstoffkette, die sich zumindest teilweise von konjugierten Dienen ableiten. Besonders bevorzugt ist, wenn der Dienkautschuk oder die Dienkautschuke ausgewählt ist bzw. sind aus der Gruppe, bestehend aus Naturkautschuk (NR), synthetischem Polyisopren (IR), Polybutadien (BR) und Styrol-Butadien-Copolymer (SBR, E-SBR, S-SBR). Diese Dienelastomere lassen sich gut zu der erfindungsgemäßen Kautschukmischung verarbeiten und zeigen gute Reifeneigenschaften.

Insbesondere für den Einsatz der Kautschukmischung als Laufstreifen für Nutzfahrzeugreifen ist es von Vorteil, wenn die Mischung zumindest 95 phr Naturkautschuk enthält. Vulkanisate aus Mischungen mit einem derart hohen Anteil an Naturkautschuk zeichnen sich durch eine besonders hohe Weiterreißfestigkeit aus, was im Reifen zu einer Verminderung von Schnitten und Ausbrüchen (Chippinig und Chunking) im Laufstreifen führt.

Die Kautschukmischung kann neben dem hoch abriebbeständigen Ruß und dem Acetylenruß noch weitere Füllstoffe, wie beispielsweise Kieselsäure, Aluminiumoxide, Alumosilicate, Schichtsilikate, Kreide, Stärke, Magnesiumoxid, Titandioxid oder Kautschukgele, in üblichen Mengen enthalten.

Zur Verbesserung der Verarbeitbarkeit und zur Anbindung von Füllstoffen, wie beispielsweise Kieselsäure, an den Dienkautschuk können Kupplungsagenzien, z. B. Silan-Kupplungsagenzien, in üblichen Mengen in den Kautschukmischungen eingesetzt werden.

Des Weiteren kann die erfindungsgemäße Kautschukmischung übliche Zusatzstoffe in üblichen Gewichtsteilen enthalten. Zu diesen Zusatzstoffen zählen z. B. Weichmacher, Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Verarbeitungshilfsmittel wie z. B. Zinkoxid und Fettsäuren wie Stearinsäure, Wachse und Mastikationshilfsmittel wie z. B. 2,2'-Dibenzamidodiphenyldisulfid (DBD).

Die Vulkanisation wird in Anwesenheit von Schwefel oder Schwefelspendern durchgeführt, wobei einige Schwefelspender zugleich als Vulkanisationsbeschleuniger wirken können. Als Schwefelspender können dabei beispielsweise Thiuramderivate wie Tetramethylthiuramdisulfid und Dipentamethylenthiuramtetrasulfid, Morpholinderivate wie Dimorpholyldisulfid, Dimorpholyltetrasulfid und 2-Morpholinodithiobenzothiazol sowie Caprolactamdisulfid verwendet werden. Schwefel oder Schwefelspender werden im letzten Mischungschritt in den vom Fachmann gebräuchlichen Mengen (0,4 bis 4 phr, Schwefel bevorzugt in Mengen von 1,5 bis 2,5 phr) der Kautschukmischung zugesetzt.

Des Weiteren kann die Kautschukmischung vulkanisationsbeeinflussende Substanzen, wie Vulkanisationsbeschleuniger, Vulkanisationsverzögerer und Vulkanisationsaktivatoren, in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid, Guanidinbeschleuniger wie z. B. Diphenylguanidin, Thiurambeschleuniger wie z. B. Tetrabenzylthiuramdisulfid, Dithiocarbamatbeschleuniger wie z. B. Zinkdibenzyldithiocarbamat, Aminbeschleuniger wie z. B. Cyclohexylethylamin, Thioharnstoffe wie z. B. Ethylenthioharnstoff, Xanthogenatbeschleuniger, Disulfide. Die Beschleuniger können auch in Kombination miteinander eingesetzt werden, wobei sich synergistische Effekte ergeben können.

Die Herstellung der erfindungsgemäßen Kautschukmischung erfolgt auf herkömmliche Art und Weise in einer oder mehreren Mischstufen. Anschließend wird die gemischte Mischung weiterverarbeitet, z. B. durch einen Extrusionsvorgang und in die entsprechende Form eines Laufstreifenrohlings, z. B. für einen Nutzfahrzeugreifen, gebracht. Ein so erzeugter Laufstreifenmischungsrohling wird bei der Herstellung des Reifenrohlings, insbesondere Fahrzeugluftreifenrohlings, wie bekannt aufgelegt. Der Laufstreifen kann aber auch auf einen Reifenrohling, der bereits alle Reifenteile bis auf den Laufstreifen enthält, in Form eines Kautschukmischungsstreifens aufgewickelt werden. Nach der Vulkanisation des Fahrzeugreifens weist der Reifen eine hohe Abriebbeständigkeit und eine hohe Haltbarkeit der Gürtelkanten auf. Es ist bei den Reifen unerheblich, ob der gesamte Laufstreifen aus einer einzigen Mischung hergestellt worden ist oder z. B. einen Cap- und Base-Aufbau aufweist, denn wichtig ist, dass zumindest die in unmittelbarer Nähe des Gürtels vorliegende Mischung erfindungsgemäß ausgebildet ist.

Die mit den erfindungsgemäßen Mischungen als Laufstreifen hergestellten Reifen zeichnen sich durch eine hohe Haltbarkeit aus und die Temperaturen im Gürtelkantenbereich werden effektiv abgesenkt, was vor allem beim Einsatz in Nutzfahrzeugreifen, die z. B. einen Dreiecksgürtel aufweisen, von Vorteil ist und zusätzlich die Runderneuerungsfähigkeit der Nutzfahrzeugreifen verbessert.

Die Erfindung soll nun anhand von Vergleichs- und Ausführungsbeispielen, die in den Tabellen 1 bis 4 zusammengefasst sind, näher erläutert werden.

Bei sämtlichen in den Tabellen 1 und 3 enthaltenen Mischungsbeispielen sind die angegebenen Mengenangaben Gewichtsteile, die auf 100 Gewichtsteile Gesamtkautschuk bezogen sind (phr). Die Vergleichsmischungen sind mit V gekennzeichnet, die erfindungsgemäßen Mischungen sind mit E gekennzeichnet. Der Anteil an Ruß N121 wurde in der Versuchsreihe bei Tabelle 1 sukzessiv durch Acetylenruß ersetzt.

Die Mischungsherstellung erfolgte unter üblichen Bedingungen in zwei Stufen in einem Labortangentialmischer. Aus sämtlichen Mischungen wurden Prüfkörper durch optimale Vulkanisation unter Druck bei 160°C hergestellt und mit diesen Prüfkörpern für die Kautschukindustrie typische Materialeigenschaften bestimmt, die in den Tabellen 2 und 4 aufgelistet sind. Für die Tests an Prüfkörpern wurden folgende Testverfahren angewandt:
- Zugfestigkeit bei Raumtemperatur gemäß DIN 53 504
- Reißdehnung bei Raumtemperatur gemäß DIN 53 504
- statischer Modul (Spannungswerte) bei 50, 100, 200 und 300 % Dehnung bei Raumtemperatur gemäß DIN 53 504
- Shore-A-Härte bei Raumtemperatur und 70 °C gemäß DIN 53 505
- Rückprallelastizität bei Raumtemperatur und 70 °C gemäß DIN 53 512
- Bruchenergiedichte bestimmt im Zugversuch nach DIN 53 504, wobei die Bruchenergiedichte die bis zum Bruch erforderliche Arbeit, bezogen auf das Volumen der Probe, ist
- Wärmeleitfähigkeit mit dem Gerät Kemtherm QTM-D3-PD3 der Firma Kyoto Electronics gemäß DIN 52 612 (Ausgangstemperatur: Raumtemperatur)
- Abrieb gemäß DIN 53 516

**Tabelle 1**

| **Bestandteile** | **Einheit** | **V1** | **E2** | **E3** | **E4** | **E5** | **E6** | **V7** | **V8** | **V9** | **V10** |
|---|---|---|---|---|---|---|---|---|---|---|---|
| Naturkautschuk | phr | 100 | 100 | 100 | 100 | 100 | 100 | 100 | 100 | 100 | 100 |
| Ruß N121 | phr | 50 | 40 | 35 | 30 | 25 | 20 | 15 | 10 | 5 | 0 |
| Acetylenruß^{a} | phr | 0 | 10 | 15 | 20 | 25 | 30 | 35 | 40 | 45 | 50 |
| Alterungsschutzmittel | phr | 3 | 3 | 3 | 3 | 3 | 3 | 3 | 3 | 3 | 3 |
| Ozonschutzwachs | phr | 2,5 | 2,5 | 2,5 | 2.5 | 2,5 | 2,5 | 2,5 | 2,5 | 2,5 | 2,5 |
| Zinkoxid | phr | 3 | 3 | 3 | 3 | 3 | 3 | 3 | 3 | 3 | 3 |
| Stearinsäure | phr | 2 | 2 | 2 | 2 | 2 | 2 | 2 | 2 | 2 | 2 |
| Beschleuniger | phr | 1 | 1 | 1 | 1 | 1 | 1 | 1 | 1 | 1 | 1 |
| Schwefel | phr | 1,65 | 1.65 | 1,65 | 1,65 | 1,65 | 1,65 | 1,65 | 1,65 | 1,65 | 1,65 |

| | | | | | | | | | | | |
|---|---|---|---|---|---|---|---|---|---|---|---|
| ^{a}Acetylenruß mit einer Jodadsorptionszahl von 90 g/kg, einer DBP-Zahl von 199 cm³/g, einem Teilchendurchmesser von ca. 40 nm und einer BET-Zahl von 75 m²/g | | | | | | | | | | | |

**Tabelle 2**

| **Eigenschaften** | **Einheit** | **V1** | **E2** | **E3** | **E4** | **E5** | **E6** | **V7** | **V8** | **V9** | **V10** |
|---|---|---|---|---|---|---|---|---|---|---|---|
| Zugfestigkeit | MPa | 24 | 22,5 | 22,5 | 22,8 | 21,1 | 20,7 | 20,1 | 18,3 | 20,1 | 19 |
| Modul 50 % | MPa | 1,41 | 1,34 | 1,37 | 1,35 | 1,38 | 1,31 | 1,35 | 1,27 | 1,4 | 1,39 |
| Modul 300 % | MPa | 16,22 | 14,72 | 14,6 | 14,11 | 14,11 | 13,22 | 13,25 | 12,56 | 13,09 | 12,83 |
| Härte | Shore A | 63,7 | 63,2 | 63,2 | 62,1 | 62,8 | 61,6 | 62 | 61,7 | 63,2 | 62,7 |
| Rückpr.elas. bei RT | % | 46,7 | 47,3 | 50 | 50,7 | 51 | 49,8 | 51 | 50,5 | 52,5 | 53,1 |
| Rückpr.elas. bei 70°C | % | 55,7 | 57,6 | 57,2 | 57,7 | 58,6 | 57,2 | 58,5 | 56,5 | 58,3 | 59,1 |
| Bruchenergiedichte | J/cm³ | 41,76 | 39,88 | 41,23 | 43,79 | 38,5 | 39,35 | 37,84 | 32,78 | 39,32 | 35,89 |
| Wärmeleitfähigkeit | W (m*K) | 100 | 107 | 116 | 116 | 119 | 126 | 134 | 139 | 139 | 146 |
| DIN-Abrieb | mm³ | 91 | 91 | 96 | 93 | 106 | 109 | 127 | 117 | 121 | 127 |

Aus der Tabelle 2 wird ersichtlich, dass man durch Kombination von hoch abriebbeständigem Ruß mit Acetylenruß Vulkanisate herstellen kann, die sich durch einen geringen Abrieb und eine gute Wärmeleitfähigkeit auszeichnen. Überraschenderweise steigt der Abrieb mit zunehmendem Acytylenrußanteil zunächst nicht linear an. Der Abrieb verbleibt bis zur einem Acetylenranteil von 30 phr auf einem niedrigen Niveau, wobei der Abrieb bis zu 20 phr Acetylenruß sogar auf dem Niveau der Mischung V1 ohne Acetylenruß verbleibt. Erst bei mehr als 30 phr Acetylenruß verzeichnet man ein deutlich verschlechtertes Abriebverhalten. Die anderen Vulkanisateigenschaften verbleiben auch mit Acetylenruß auf ähnlichem Niveau, so dass andere Reifeneigenschaften bei Verwendung solcher Mischungen für den Reifenlaufstreifen nicht in Mitleidenschaft gezogen werden.

Es wurden ferner noch Prüfkörper aus den in Tabelle 3 aufgeführten Mischungen hergestellt, die zusätzlich zu den üblichen Materialeigenschaften hinsichtlich des Abriebs auf einem Abriebtester 100 (LAT 100) System Dr. Grosch bei einer Last von 75 N und einem Schräglaufwinkel von 0,2 bis 9° untersucht wurden. Die Laufleistungserwartung der Mischung V11 wurde dabei gleich 100 % gesetzt. Auch die Wärmeleitfähigkeit der V11 wurde gleich 100 % gesetzt. Werte kleiner als 100 bedeuten eine Verschlechterung der entsprechenden Eigenschaft. Zur Kompensation des Moduls wurde in der auf Abrieb und Wärmeleitfähigkeit optimierten Mischung E12 der Gesamtfüllstoffanteil von 48,5 auf 50 phr erhöht.

**Tabelle 3**

| **Bestandteile** | **Einheit** | **V11** | **E12** | **V13** |
|---|---|---|---|---|
| Naturkautschuk | phr | 100 | 100 | 100 |
| Ruß N121 | phr | 48,5 | 30 | 0 |
| Acetylenruß^{a} | phr | 0 | 20 | 48,5 |
| Alterungsschutzmittel | phr | 3 | 3 | 3 |
| Ozonschutzwachs | phr | 2,5 | 2,5 | 2,5 |
| Zinkoxid | phr | 3 | 3 | 3 |
| Stearinsäure | phr | 2 | 2 | 2 |
| Beschleuniger | phr | 1 | 1 | 1 |
| Schwefel | phr | 1,65 | 1,65 | 1,65 |

**Tabelle 4**

| **Eigenschaften** | **Einheit** | **V11** | **E12** | **V13** |
|---|---|---|---|---|
| Zugfestigkeit | MPa | 23,6 | 22,2 | 19,6 |
| Reißdehnung | % | 495 | 502 | 520 |
| Modul 100 % | MPa | 2 | 2,1 | 2,3 |
| Modul 200 % | MPa | 6,3 | 6,4 | 5,9 |
| Modul 300 % | MPa | 13,1 | 12,5 | 10,3 |
| Härte bei RT | Shore A | 60 | 60 | 61 |
| Härte bei 70°C | Shore A | 56 | 56 | 58 |
| Rückpr.elas. bei RT | % | 46,4 | 49,7 | 56,9 |
| Rückpr.elas. bei 70 °C | % | 54,8 | 59,1 | 63,3 |
| Bruchenergie-dichte | J/cm³ | 43,9 | 43,1 | 40 |
| Wärmeleitfähigkeit | % | 100 | 120 | 146 |
| Laufleistungserwartung | % | 100 | 100 | 60 |

Die Vulkanisate der Mischung E12 zeichnen sich im Vergleich zu Mischungen, die nur Ruß N 121 enthalten, durch eine deutlich verbesserte Wärmeleitfähigkeit aus. Aber gleichzeitig verbleibt der Abrieb auf gleichem Niveau, während bei einer Mischung, die nur Acetylenruß enthält, die Laufleistungserwartung um 40 % reduziert ist. Ein Reifen mit einem Laufstreifen aus einer Mischung V 13 hat eine deutlich verminderte Lebensdauer.

## Patentansprüche

1. Reifen, insbesondere Nutzfahrzeugreifen, dessen Laufstreifen zumindest zum Teil aus einer mit Schwefel vulkanisierten Kautschukmischung besteht, wobei die Kautschukmischung
- 20 - 45 phr eines hoch abriebbeständigen Rußes mit einer Jodadsorptionszahl von 110 - 170 g/kg und einer DBP-Zahl von 90 - 140 cm³/100 g und
- 5 - 30 phr Acetylenruß
enthält.

2. Reifen nach Anspruch 1, **dadurch gekennzeichnet, dass** die Kautschukmischung 25 bis 35 phr des hoch abriebbeständigen Rußes enthält.

3. Reifen nach Anspruch 1 oder 2, **dadurch gekennzeichnet, dass** die Kautschukmischung 15 bis 20 phr des Acetylenrußes enthält.

4. Reifen nach zumindest einem der vorhergehenden Ansprüche, **dadurch gekennzeichnet, dass** die Kautschukmischung zumindest 95 phr Naturkautschuk enthält.

## Claims

1. Tyre, in particular commercial-vehicle tyre, the tread of which is at least to some extent composed of a sulphur-vulcanized rubber mixture, where the rubber mixture comprises
- from 20 to 45 phr of a highly abrasion-resistant carbon black with an iodine adsorption number of from 110-170 g/kg and with a DBP number of from 90-140 cm³/100 g and
- from 5 to 30 phr of acetylene black.

2. Tyre according to Claim 1, **characterized in that** the rubber mixture comprises from 25 to 35 phr of the highly abrasion-resistant carbon black.

3. Tyre according to Claim 1 or 2, **characterized in that** the rubber mixture comprises from 15 to 20 phr of the acetylene black.

4. Tyre according to at least one of the preceding claims, **characterized in that** the rubber mixture comprises at least 95 phr of natural rubber.

## Revendications

1. Pneus, en particulier pneus pour voitures utilitaires, dont la bande de roulement est constituée, au moins partiellement, par un mélange de caoutchoucs vulcanisé avec du soufre, où le mélange de caoutchoucs contient
- 20 à 45 parties pour cent en caoutchouc d'une suie hautement résistante à l'abrasion présentant un indice d'absorption d'iode de 110-170 g/kg et un indice DBP de 90-140 cm³/100 g et
- 5-30 parties pour cent en caoutchouc de suie d'acétylène.

2. Pneus selon la revendication 1, **caractérisés en ce que** le mélange de caoutchoucs contient 25 à 35 parties pour cent en caoutchouc de la suie hautement résistante à l'abrasion.

3. Pneus selon la revendication 1 ou 2, **caractérisés en ce que** le mélange de caoutchoucs contient 15 à 20 parties pour cent en caoutchouc de la suie d'acétylène.

4. Pneus selon au moins l'une quelconque des revendications précédentes, **caractérisés en ce que** le mélange de caoutchoucs contient au moins 95 parties pour cent en caoutchouc de caoutchouc naturel.
